Europäisches Patentamt

European Patent Office

Office européen des brevets

(11) Veröffentlichungsnummer: **0 477 479 A1**

# EUROPÄISCHE PATENTANMELDUNG

(21) Anmeldenummer: **91110540.1**

(51) Int. Cl.⁵: **A01F 15/14**, A01D 59/00

(22) Anmeldetag: **26.06.91**

(30) Priorität: **07.09.90 DD 343890**

(43) Veröffentlichungstag der Anmeldung:
**01.04.92 Patentblatt 92/14**

(84) Benannte Vertragsstaaten:
**BE DE DK FR GB IT SE**

(71) Anmelder: **Fortschritt Erntemaschinen GmbH
Berghausstrasse 1-3
O-8355 Neustadt(DE)**

(72) Erfinder: **Prellwitz, Hubert
Mittelweg 28
O-8351 Polenz(DE)**
Erfinder: **Berth, Dieter
Berthelsdorfer Strasse 32
O-8355 Neustadt(DE)**
Erfinder: **Neubert, Lutz
Hauptstrasse 2
O-8351 Langenwolmsdorf(DE)**

(74) Vertreter: **Müller, Lutz
Patentassessor, Fortschritt Erntemaschinen
GbmH, Berghausstrasse 1-3
O-8355 Neustadt(DE)**

(54) **Vorrichtung zur Kontrolle des Bindevorganges.**

(57) Bei einer landwirtschaftlichen Ballenpresse für Quaderballen soll eine Vorrichtung zur Kontrolle des Bindevorganges, insbesondere Fehlbindungsanzeige, mit geringem Ausfallverhalten und Herstellungsaufwand und erweitertem Anwendungsbereich geschaffen werden, indem bei konstruktiv einfachem Aufbau ein sicheres Abgleiten der Bindematerialschlinge gewährleistet wird und die Bindematerialschlinge als auch der Bindematerialstrang für den nächsten Ballen kontrolliert wird.

Hierzu sitzt zwischen Fadenandrücker (6) und Preßkanaldecke (9) ein in Richtung der Ballenbewegung gegen eine Feder (15) schwenkbarer Taster (13). Der Taster (13) liegt in einer ersten Lage quer über dem Nadelschlitz (12), in einer zweiten Lage, wo die Bindematerialstrangebene nicht gekreuzt wird, liegt der Taster (13) vor einem Sensor (18). Außerdem besitzt der Taster (13) einen Mitnehmer (16), der am Fadenandrücker (6) anliegt. Zweckmäßiger Weise sitzen Fadenandrücker (6) und Taster (13) auf einer gemeinsamen Achse (8).

Fig. 1

Die Erfindung betrifft eine Vorrichtung zur Kontrolle des Bindevorganges, insbesondere zum Feststellen von Fehlbindungen, an landwirtschaftlichen Ballenpressen, welche quaderförmige Ballen herstellen. Anwendbar ist die Erfindung an derartigen Ballenpressen, die über einem Preßkanal einen oder mehrere Knüpfapparate besitzen und je Knüpfapparat einen den Ballen umfassenden Bindematerialstrang besitzen, wobei das erste Ende des Bindematerialstranges im Knüpfapparat gehalten wird und das zweite Ende über eine Bindenadel dem Knüpfapparat von unten zugeführt wird und durch einen Fadenandrücker nach der Zuführung in eine bestimmte Lage zu den Arbeitsteilen des Knüpfapparates gebracht wird. Hierzu führt der Fadenandrücker über dem Nadelschlitz in der Preßkanaldecke eine Schwenkbewegung aus.

Charakteristik des bekannten Standes der Technik

Das Verbinden der Enden des Bindematerialstranges kann aus verschiedenen Gründen, wie zum Beispiel das Wegbleiben des Bindematerialstranges, Fehleinstellung der Knüpfapparate, Reißen des Bindematerialstranges, gestört werden, so daß die Verbindung der Bindematerialenden nicht ausreichend fest oder gar nicht gebildet wird. Damit ist der Ballen nicht verwendbar. Besonders bei Großballen, wo auf Grund der großen Preßgutanhäufung ein ungebundener Ballen erhebliche Nacharbeit verursacht, besteht ein unbedingter Bedarf an der Anzeige von Fehlbindungen.

Bekannt sind Fehlbindungsanzeigen für Ballenpressen mit Zweifadenbindung, welche auf der Kontrolle der Spannung und des Vorhandenseins des Oberfadens basieren. In der US-PS 41 96 661 wird bei einem Fehler der beschriebenen Art eine aufwendige mechanische Anzeigevorrichtung ausgelöst. Bei der Lösung nach EP-A- 0 286 900 wird das Fehlen oder die ungenügende Spannung des Oberfadens in Zuordnung zu bestimmten Etappen des Knüpfprozesses über ein kompliziertes Hebelsystem und entsprechende Sensorenanordnungen in ein verwertbares Signal umgewandelt. Diese Vorrichtungen sind auf Ballenpressen mit Zweifadenbindung beschränkt, geben keine Auskunft über den Endzustand der Verbindung der Bindematerialstränge und sind sehr aufwendig.

Des weiteren ist nach der DD-PS 208 748 bekannt, daß ein Taster am im Fadenfänger geklemmten und um den gebildeten Ballen herumführenden Bindematerialstrang anliegt. Diese Vorrichtung informiert nur über das Vorhandensein eines Bindematerialstranges, jedoch nicht über die Bildung und Qualität des Knotens.

In der PL-PS 135 455 wird eine Vorrichtung beschrieben, in der ein Auslöseteil während des Abziehens des Knotens vom Knoterschnabel zwischen Bindematerialschlinge und Ballenoberkante gerät und bei ordnungsgemäßer Verbindung der Bindematerialstränge bewegt wird. Durch die Bewegung wird über einen Kontakt ein auswertbares Signal erzeugt. Diese Vorrichtung muß unmittelbar im Bereich unter dem Knoterschnabel angeordnet sein. Gerade dort sind aber äußerst beengte Platzverhältnisse und die Funktiontüchtigkeit sowohl der Vorrichtung als auch des Knüpfapparates ist nur schwer zu gewährleisten.

Mit der aus der EP-A- 0 294 078 bekannten Vorrichtung wurde dieses Verfahren des Einbindens eines Tasters weiterentwickelt. Ein auf dem Fadenandrücker gelagerter Taster schwenkt bei der Bewegung des Fadenandrückers unter den im Fadenhalter geklemmten Bindematerialstrang. Wird der Taster von der geschlossenen Bindematerialschlinge erfaßt, bewegt sich Taster, Fadenandrücker, Fadenandrückersteuerung und ein zusätzlicher Hebel. Der Hebel gelangt letztlich in den Bereich eines Sensors, dessen Signale für die Unversehrtheit der Verbindung der Bindematerialstränge ausgewertet wird.

Diese Lösung ist in ihrem mechanischen Teil relativ aufwendig, wodurch viele Fehlerquellen entstehen können. Es besteht die Möglichkeit, daß die Bindematerialschlinge an der Lagerung des Tasters hängenbleibt, was zu Funktionsstörungen der Ballenpresse führt. Weiterhin gibt diese Vorrichtung keine Auskunft über das Vorhandensein der Voraussetzungen für das Binden des nächsten Ballens, d.h., ob der Bindematerialstrang für den nächsten Ballen ordnungsgemäß ausgelegt ist. Dadurch entsteht immer noch ein Nacharbeitsaufwand, da das Fehlersignal erst bei der Kontrolle der Verbindung entsteht.

Ziel der Erfindung

Ziel der Erfindung ist es, eine Vorrichtung zur Kontrolle des Bindevorganges zu schaffen, deren Ausfallwahrscheinlichkeit bei gesenktem Herstellungsaufwand verringert ist sowie den Nacharbeitsaufwand für nichtgebundene Ballen weiter herabsetzt.

Darlegung des Wesens der Erfindung

Der Erfindung liegt die Aufgabe zugrunde, eine Vorrichtung zur Kontrolle des Bindevorganges, insbesondere zum Feststellen von Fehlbindungen, an landwirtschaftlichen Ballenpressen für quaderförmige Ballen mit über einen Preßkanal angeordnetem Knüpfapparat und einer Bindenadel, die den im Knüpfapparat gehaltenen und um den Ballen liegenden Bindematerialstrang dem Knüpfapparat erneut zugeführt sowie einen Fadenandrücker, der den erneut zugeführten Bindematerialstrang in eine bestimmte Lage zum Bindeapparat bringt, wobei ein Taster, welcher hinter dem Knüpfapparat angeordnet ist, zwischen den Bindematerialstrang und den Ballen gebracht wird, zu schaffen, die bei einem konstruktiv einfachem Aufbau ein sicheres Abgleiten der Bindematerialschlinge gewährleistet und neben der Überprüfung der Verbindung der Bindematerialstränge des gerade gebundenen Ballens auch die Bindevoraussetzungen, d. h. die ordnungsgemäße Halterung des Bindematerialstranges für den nachfolgenden Ballen, kontrolliert.

Erfindungsgemäß wird dies erreicht, indem der Taster zwischen dem Fadenandrücker und dem Preßkanal in Richtung der Ballenbewegung entgegen einer Feder schwenkbar gelagert ist. In einer ersten Lage kreuzt der Taster die Ebene des Bindematerialstranges, in einer zweiten Lage wird die Ebene nicht gekreuzt und der Taster in in den Wirkbereich eines Sensors geschwenkt. Zwischen dem Taster und dem Fadenandrücker ist ein Mitnehmer angeordnet, welcher bei der Schwenkbewegung des Fadenandrückers über den Nadelschlitz den Taster von der ersten in die zweite Lage mitnimmt. Ist ein Ballen gepreßt und wird der Bindevorgang eingeleitet, so bringt die Bindenadel den Bindematerialstrang von unten durch den Preßkanal zum Bindeapparat, wo er im Fadenhalter geklemmt wird. Der Fadenandrücker schwenkt über den Nadelschlitz und bringt den Bindematerialstrang in den Wirkbereich des Knoterschnabels. Bei dieser Schwenkbewegung des Fadenandrückers wird über den Mitnehmer der Taster in seine zweite Lage in den Wirkbereich des Sensors verschwenkt. Das im Sensor erzeugte Signal wird als Beginn des Bindevorganges ausgewertet. Da der Fadenandrücker sofort zurückschwenkt, gelangt der Taster nach dem Abziehen des Knotens vom Knoterschnabel zwischen Ballenoberkante und Bindematerialschlinge.

Bei Fortgang des Pressens wird der soeben gebundene Ballen weiterbewegt und es bildet sich ein neuer, noch ungebundener Ballen. Zwischen beiden Ballen verlaufen zwei Bindematerialstränge, nämlich die Bindematerialschlinge des soeben gebundenen Ballens und der Anfangsstrang für den nächsten Ballen, wobei die Bindematerialschlinge im Knotenbereich relativ locker liegt und der Anfangsstrang, der im Fadenhalter geklemmt ist, früher gestrafft wird. Deshalb wird der Taster zuerst durch den Anfangsstrang ein zweites Mal in seine zweite Lage vor den Sensor verschwenkt. Es entsteht ein Signal, welches für die Voraussetzung zum ordnungsgemäßen Binden des nachfolgenden Ballens ausgewertet wird. Nach dem Passieren des Anfangsstranges zieht die Feder den Taster in die erste Lage zurück. Er befindet sich dabei immer noch innerhalb der Bindematerialschlinge. Beim weiteren Fortgang des Pressens kommt die Bindematerialschlinge zur Anlage am Taster und verschwenkt diesem zum dritten Mal in seine zweite Lage. Das erzeugte Signal wird zur Kontrolle der ordnungsgemäßen Verbindung der Bindematerialenden des zuletzt gebundenen Ballens ausgewertet. Gleichzeitig erfolgt je nach Einstellung der Rückstellkraft der Feder ein weiteres Festziehen des Knotens. Zur Kontrolle des Bindevorganges und der Voraussetzungen für die Bindung des nächsten Ballen wird das Vorhandensein des zweiten und dritten Signals und deren zeitliche Abfolge zum ersten Signal ausgewertet. Bleibt das zweite oder dritte Signal in einem technologisch bestimmten Zeitabstand zum ersten Signal aus, so wird die Bedienperson über geeignete Mittel, wie z.B. durch arkustische oder optische Warneinrichtungen, informiert.

Nach der Erfindung ist es hierzu zweckmäßig, daß der Taster und der Fadenandrücker auf einer gemeinsamen Achse gelagert sind und die Feder zwischen einer hinteren Verlängerung des Tasters und einem Arm des Fadenandrückers gespannt ist. Der Mitnehmer ist dabei fest am Taster angebracht. Die Erfindung wurde anhand einer Ballenpresse mit einer Bindevorrichtung beschrieben. Es ist aber genauso möglich, daß die erfindungsgemäße Vorrichtung bei mehreren nebeneinander angeordneten Bindevorrichtungen anzuwenden.

Mit der Erfindung wurde eine Lösung geschaffen, bei der die Herstellungsaufwendungen erheblich verringert werden, wobei gleichzeitig die Verfügbarkeit verbessert wurde. Es entfallen eine Vielzahl von Koppel- und Übertragungselementen. Gleichzeitig wurden gegenüber den vorbekannten Lösungen Störstellen für den Bindeablauf beseitigt. Der Hauptvorteil der erfindungsgemäßen Lösung liegt aber in der weiteren Verringerung der Nacharbeit, indem bereits bei der Bindung des ersten Ballens die Voraussetzungen zum Binden des nächsten Ballens kontrolliert werden. Dieser Effekt kann erstmalig realisiert werden.

Ausführungsbeispiel

Nachstehend soll die Erfindung an einem Ausführungsbeispiel näher erläutert werden. In den zugehörigen Zeichnungen zeigt

Fig. 1: eine Ansicht von hinten oben auf einen Ausschnitt eines Preßkanales einer Ballenpresse bei Beginn des Bindevorganges;

Fig. 2: eine Ansicht nach Fig. 1 im Augenblick, wo die Bindenadel den Bindematerialstrang zum Knüpfapparat gebracht hat;

Fig. 3: eine Ansicht nach Fig 1 im Augenblick, wo der Knoten vom Knoterschnabel abgezogen wurde;

Fig. 4:    eine Ansicht nach Fig. 1 nach weiterem Fortgang des Pressens.

Fig. 5:    eine vereinfachte Draufsicht der Stellung nach Fig. 1;

Fig. 6:    eine vereinfachte Draufsicht der Stellung nach Fig. 2;

Fig. 7:    eine vereinfachte Draufsicht der Stellung nach Fig. 3;

Fig. 8:    eine vereinfachte Draufsicht der Stellung nach Fig. 4;

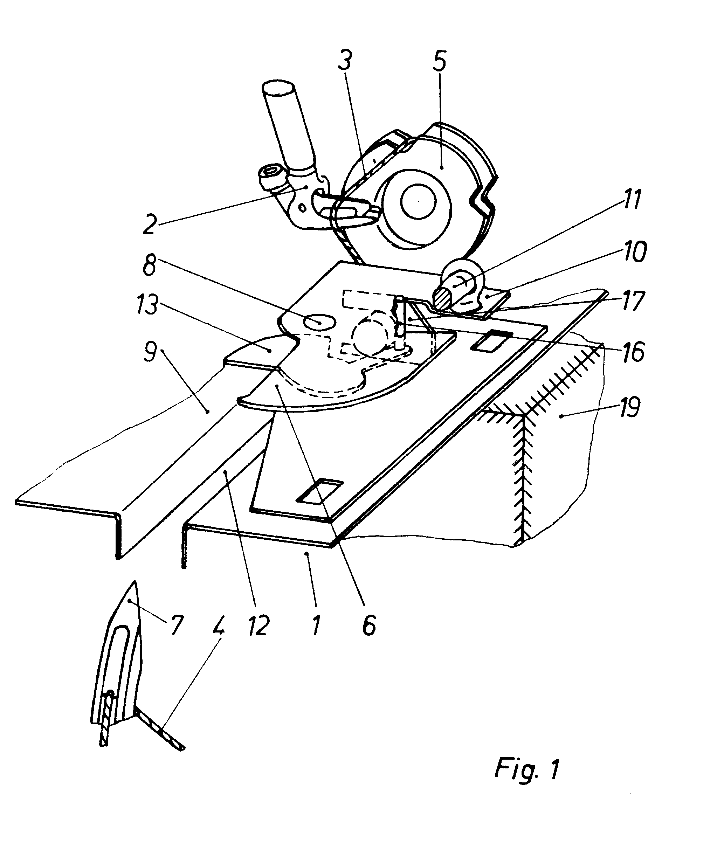

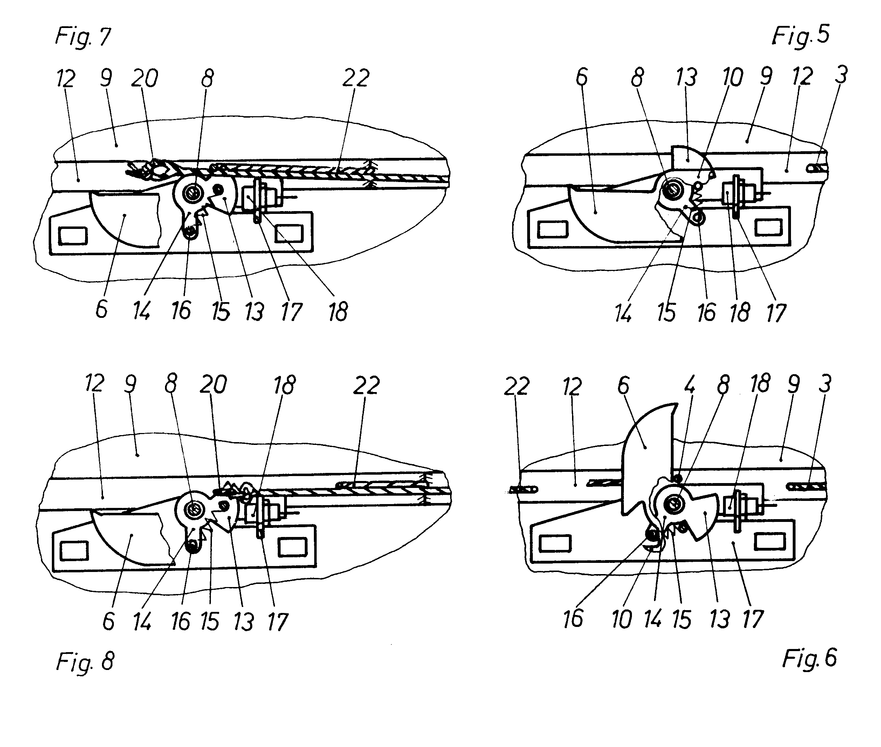

An einer nicht näher dargestellten Ballenpresse für landwirtschaftliche Erntegüter sind auf der Oberseite des Preßkanales 1 mehrere Knüpfapparate nebeneinander angeordnet. Die Knüpfapparate besitzen unter anderem in bekannter Weise einen Knoterschnabel 2, der die Bindematerialstränge 3; 4 verbindet, einen Fadenhalter 5, der die Bindematerialstränge 3; 4 klemmt und einen Fadenandrükker 6, der den von der Bindenadel 7 von unten zugeführten Bindematerialstrang 4 in eine für den Knoterschnabel 2 benötigte Lage drückt. Der Fadenandrücker 6 ist auf einer senkrechten Achse 8 gelagert, welche wiederum auf der Preßkanaldecke 9 befestigt ist. Ferner besitzt der Fadenandrücker 6 einen hinteren Arm 10, an dem ein Steuerhebel 11 für den Fadenandrücker 6 angelenkt ist. In einer ersten Stellung, die der Ruhelage entspricht, liegt der Fadenandrücker 6 etwa parallel zu einem Nadelschlitz 12 der Preßkanaldecke 9 (siehe Fig. 1). Weiter ist zwischen dem Fadenandrücker 6 und der Preßkanaldecke 9 auf der Achse 8 ein Taster 13 gelagert, so daß seine Schwenkebene parallel zur Schwenkebene des Fadenandrückers 6 liegt. Der Taster 13 besitzt etwa die Form eines Kreissektors mit einer seitlichen Verlängerung 14. Zwischen der Verlängerung 14 und dem Arm 10 ist eine Feder 15, insbesondere eine Zugfeder, vorgespannt eingehangen, so daß der Taster 13 bei fehlender Belastung stets mit einem Mitnehmer 16 gegen den Fadenandrücker 6 gezogen wird. Somit steht der Taster 13 in einer ersten Stellung quer über dem Nadelschlitz 12. Dabei ist der Radius des Tasters 13 so groß gewählt, daß der Taster 13 bis zur gegenüberliegenden Seite des Nadelschlitzes 12 reicht. Letztlich ist in Arbeitsrichtung der Ballenpresse hinter dem Fadenandrücker 6 bzw. der Achse 8 über einen Halter 17 ein Sensor 18 auf der Preßkanaldecke 9 derart befestigt, daß er in einem geringem Abstand vom Umfang des Tasters 13 liegt, wenn der Taster 13 in eine zweite Lage verschwenkt ist. Diese zweite Lage ist gekennzeichnet durch die Freigabe der Ebene deer Bindematerialstränge 3; 4 durch den Taster 13 (siehe Fig. 6 - 8).

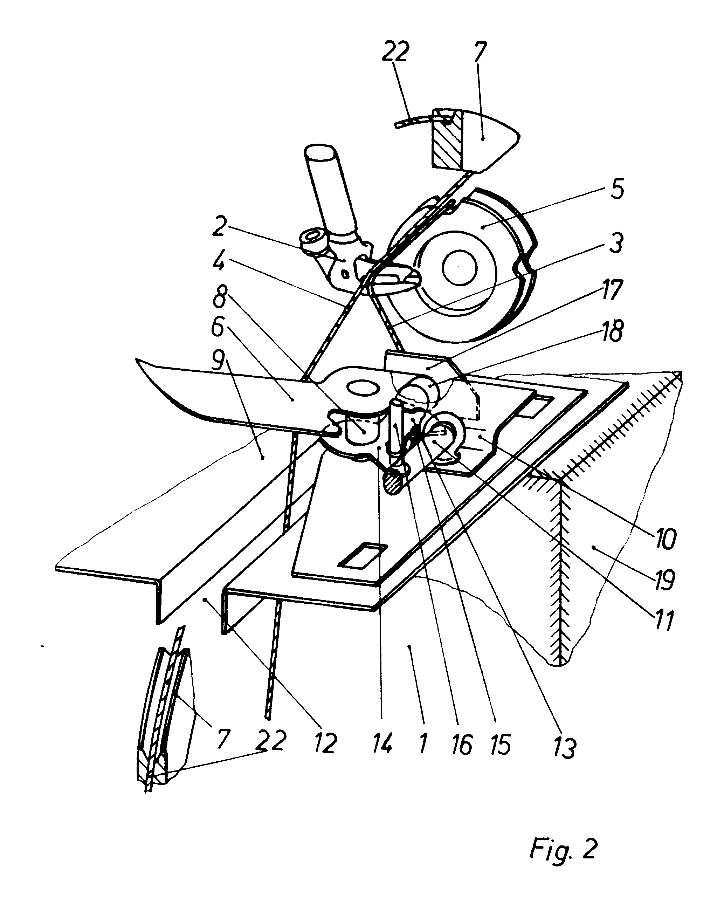

Vor Beginn des Bindevorganges (Fig. 1 und 5) liegen Fadenandrükker 6 und Taster 13 in ihrer ersten Lage. Der Bindematerialstrang 3 liegt um den fast vollständig hergestellten Ballen 19 und verläuft straff gespannt um den Knoterschnabel 2 zum Fadenhalter 5. Wird der Bindevorgang ausgelöst (Fig. 2 und 6), z.B. über ein Strohrad, eine Schaltangel und eine Eintourenkupplung, so wird erst die Bindenadel 7 mit dem Bindematerialstrang 4 hinter dem Ballen 19 durch den Preßkanal 1 zum Bindeapparat bewegt. Der Bindematerialstrang 4 wird im Fadenhalter 5 geklemmt und über den Steuerhebel 11 wird der Fadenandrücker 6 in seine zweite Lage verschwenkt, um den Bindematerialstrang 4 in die richtige Stellung bezuglich des Knoterschnabels 2 zu bringen. Über den Mitnehmer 16 wird gleichzeitig der Taster 13 in seine zweite Lage vor dem Sensor 18 verschwenkt. Dadurch wird im Sensor 18 ein erstes Signal erzeugt, welches als Beginn des Bindevorganges ausgewertet wird. Unmittelbar danach wird der Fadenandrücker 6 wieder in seine erste Lage zurückgeschwenkt. Da kein Hindernis vorhanden ist, schwenkt der Taster 13 durch die Feder 15 gezogen ebenfalls zurück in seine erste Lage.

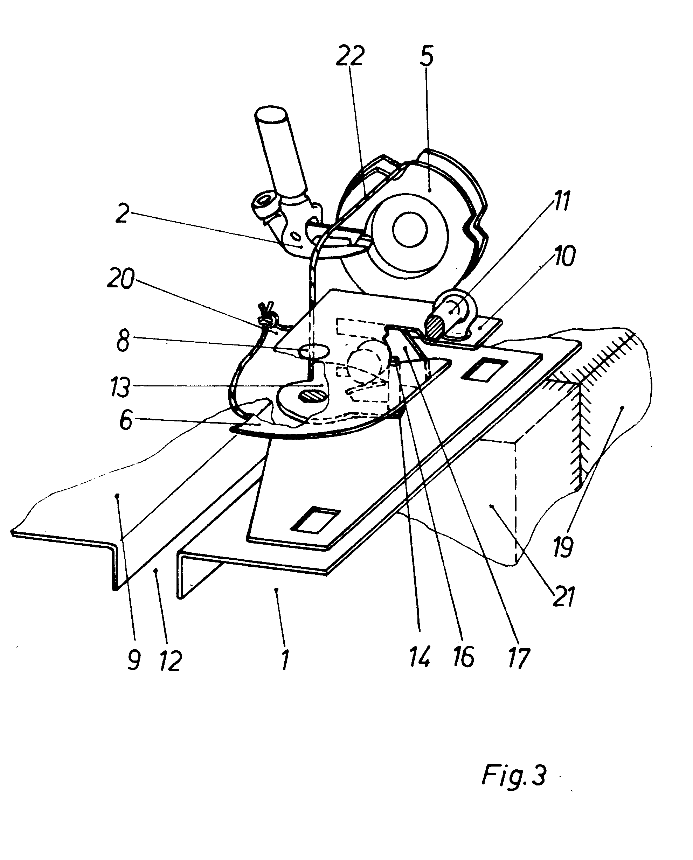

Beim Fortgang des technologischen Ablaufes in der Presse wird die Verbindung der Materialstränge 3; 4 hergestellt und die Enden abgeschnitten (Fig. 3 und 7). Es bildet sich eine lose Schlinge 20, unter der der Taster 13 liegt. Durch das fortlaufende Pressen von Erntegut wird zwischenzeitlich ein nachfolgender Ballen 21 gebildet, der den gerade gebundenen Ballen 19 weiter schiebt. Dadurch strafft sich als erstes der im Fadenhalter 5 geklemmte Bindematerialstrang 22 für den nachfolgenden Ballen 21 und drückt bei der Fortbewegung den Taster 13 aus seiner Bahn vor den Sensor 18. Das erzeugte Signal dient als Hinweis für die ordnungsgemäße Bindematerialstranganlagefür den nachfolgenden Ballen 21. Hat der Bindematerialstrang 22 den Taster 13 passiert, wird dieser durch die Feder 15 wieder in seine erste Lage unter die immer noch lockere Schlinge 20 zurückgezogen.

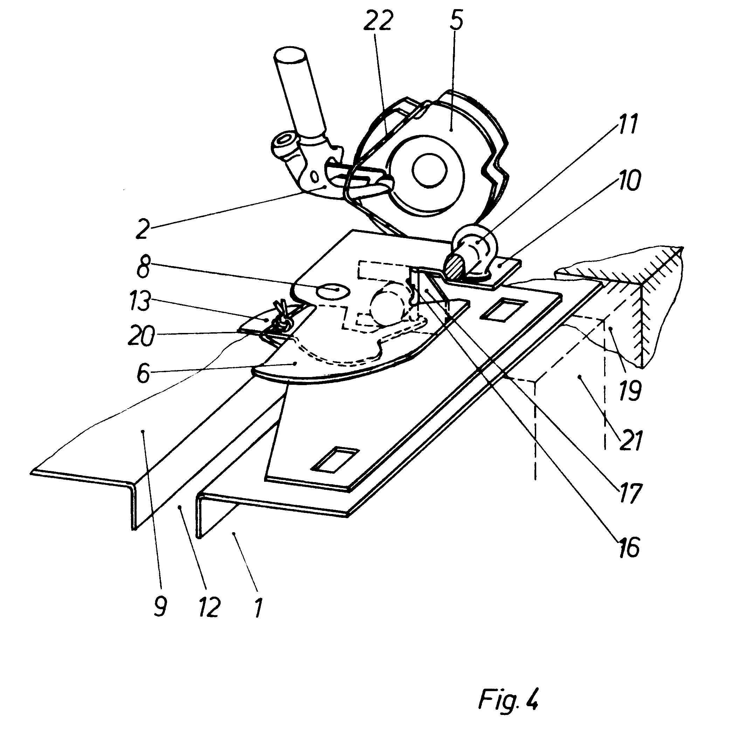

Nach weiteren Preßvorgängen (Fig. 4 und 8) hat der nachfolgende Ballen 21 den gebundenen Ballen 19 so weit nach hinten geschoben, daß die Schlinge 20 am Taster 13 zur Anlage kommt und diesen in Richtung seiner zweiten Stellung verdreht, bis der Taster 13 die Ebene der Schlinge 20 bzw. der Bindematerialstränge 3; 4 verlassen hat. Dabei wird ein drittes Signal im Sensor 18 erzeugt, welches für die ordnungsgemäße Verbindung der Bindematerialstränge 3; 4 ausgewertet wird. Anschließend wird der Taster 13 durch die Feder 15 in seine erste Lage zurückgezogen. Durch die von der Feder 15 erzeugte Gegenkraft wird bei diesem Tastvorgang gleichzeitig die Verbindung der Bindematerialstränge 3; 4 weiter festgezogen.

Die drei Signale werden entsprechend ihrer zeitlichen Abfolge bzw. der technologisch bedingten Abstände ausgewertet und bei Nichteinhaltung von vorbestimmten Grenzwerten wird der Bedienperson über nicht dargestellte optische oder arkustische Mittel eine Warnung zugeleitet.

Aufstellung der verwendeten Bezugszeichen

| | |
|---|---|
| 1 | Preßkanal |
| 2 | Knoterschnabel |
| 3; 4 | Bindematerialstrang |
| 5 | Fadenhalter |
| 6 | Fadenandrücker |
| 7 | Bindenadel |
| 8 | Achse |
| 9 | Preßkanaldecke |
| 10 | Arm |
| 11 | Steuerhebel |
| 12 | Nadelschlitz |
| 13 | Taster |
| 14 | Verlängerung |
| 15 | Feder |
| 16 | Mitnehmer |
| 17 | Halter |
| 18 | Sensor |
| 19 | Ballen |
| 20 | Schlinge |
| 21 | Ballen |
| 22 | Bindematerialstrang |

**Patentansprüche**

1. Vorrichtung zur Kontrolle des Bindevorganges, insbesondere zum Feststellen von Fehlbindungen, an landwirtschaftlichen Ballenpressen für quaderförmige Ballen mit über einem Preßkanal angeordnetem Knüpfapparat und einer Bindenadel, die den im Knüpfapparat gehaltenen und um den Ballen liegenden Bindematerialstrang dem Krüpfapparat erneut zuführt sowie einen Fadenandrücker, der den erneut zugeführten Bindematerialstrang in eine bestimmte Lage zum Knüpfapparat bringt, wobei ein Taster, welcher hinter dem Knüpfapparat angeordnet ist, zwischen den Bindematerialstrang und den Ballen gebracht wird, dadurch gekennzeichnet, daß der Taster (13) zwischen dem Fadenandrücker (6) und dem Preßkanal (1) in Richtung der Ballenbewegung entgegen einer Feder (15) schwenkbar gelagert ist, wobei der Taster (13) in einer ersten Lage die Ebene des Bindematerialstranges (3; 4) kreuzt und in einer zweiten Lage, in der die Ebene des Bindematerialstranges (3; 4) nicht gekreuzt wird, in dem Wirkbereich eines Sensors (18) geschwenkt ist, und zwischen Taster (13) und Fadenandrücker (6) ein Mitnehmer (16) angeordnet ist, welcher bei der Schwenkbewegung des Fadenandrückers (6) über den Nadelschlitz (12) den Taster (13) von der ersten in die zweite Lage mitnimmt.

2. Vorrichtung zur Kontrolle des Bindevorganges nach Anspruch 1, dadurch gekennzeichnet, daß der Taster (13) und der Fadenandrücker (6) auf einer gemeinsamen Achse (8) gelagert sind.

3. Vorrichtung zur Kontrolle des Bindevorganges nach Anspruch 1, dadurch gekennzeichnet, daß die Feder (15) zwischen einer hinteren Verlängerung des Tasters (13) und einem Arm (10) des Fadenandrückers (6) gespannt ist und der Mitnehmer (16) fest am Taster (13) angebracht ist.

EP 0 477 479 A1

Fig. 1

Fig. 2

Fig.3

Fig. 4

*Fig. 7*

*Fig. 5*

*Fig. 8*

*Fig. 6*

EP 0 477 479 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | EP-A-0 294 078   (FORD NEW HOLLAND, INC.) <br> * Spalte 3, Zeile 10 - Spalte 5, Zeile 8; Abbildungen * <br> – – – | 1-3 | A 01 F 15/14 <br> A 01 D 59/00 |
| D,A | EP-A-0 286 900   (HESSTON S.A.) <br> * Spalte 7, Zeile 11 - Spalte 9, Zeile 5; Abbildungen 2-10 * <br> – – – | 1 | |
| A | EP-A-0 342 086   (T. COLLOT) <br> * Spalte 4, Zeilen 28-57; Abbildungen 1-5 * <br> – – – | 1 | |
| A | EP-A-0 340 397   (CLAAS OHG) <br> * Spalte 3, Zeile 20 - Spalte 4, Zeile 5; Abbildungen 2-4 * <br> – – – – – | 1 | |
| | | | **RECHERCHIERTE SACHGEBIETE (Int. Cl.5)** <br><br> A 01 F <br> A 01 R |

Der vorliegende Recherchenbericht wurde für alle Patentansprüche erstellt

| Recherchenort | Abschlußdatum der Recherche | Prüfer |
|---|---|---|
| Berlin | 06 Dezember 91 | MARTIN DEL RIO A |